# EUROPEAN PATENT SPECIFICATION

(11) **EP 0 901 295 B1**
(45) Date of publication and mention of the grant of the patent: **01.12.2004**
(21) Application number: 97202687.6
(22) Date of filing: 02.09.1997
(51) Int. Cl.: H04Q 3/00, H04Q 3/66

(54) **Method for routing messages in a communication network and device therefor**
Nachrichtenleitweglenkungsverfahren in einem Fernmeldenetz und Vorrichtung zur Durchführung des Verfahrens
Procédé d'acheminement de messages dans un réseau de communication et dispositif de mise en oeuvre

(43) Date of publication of application: 10.03.1999
(73) Proprietor: Koninklijke KPN N.V., 9726 AE Groningen (NL)
(72) Inventor: Van der Smagt, Stephanus Theodorus Alois Johannes, 2275 CG Voorburg (NL); De Vos, Aart, 2264 AK Leidschendam (NL)

(56) References cited:
- EP-A- 0 376 556
- EP-A- 0 621 734
- WO-A-95/12291
- DE-A- 4 422 546
- US-A- 5 488 715
- TARLE H: "NETWORK TRAFFIC MANAGEMENT (NTM) USING AXE AND TMOS SYSTEMS" ERICSSON REVIEW, vol. 71, no. 4, 1 January 1994, pages 172-189, XP000478226
- MISOON KIM ET AL: "SIGNALING NETWORK OPERATIONS SYSTEM (SIGNOS) IN KOREA" COMMUNICATIONS TECHNOLOGY FOR THE 1990'S AND BEYOND, DALLAS, NOV. 27 - 30, 1989, vol. 2 OF 3, 27 November 1989, INSTITUTE OF ELECTRICAL AND ELECTRONICS ENGINEERS, pages 1144-1148, XP000144911
- COAN B A ET AL: "USING DISTRIBUTED TOPOLOGY UPDATE AND PREPLANNED CONFIGURATIONS TO ACHIEVE TRUNK NETWORK SURVIVABILITY" IEEE TRANSACTIONS ON RELIABILITY, vol. 40, no. 4, 1 October 1991, pages 404-416, XP000232099
- BIJAN JABBARI: "ROUTING AND CONGESTION CONTROL IN COMMON CHANNEL SIGNALING SYSTEM NO. 7" PROCEEDINGS OF THE IEEE, vol. 80, no. 4, 1 April 1992, pages 607-617, XP000304351
- HOUCK D J ET AL: "FAILURE AND CONGESTION PROPAGATION THROUGH SIGNALING CONTROLS" FUNDAMENTAL ROLE OF TELETRAFFIC IN THE EVOLUTION OF TELECOMMUNICATI NETWORKS, PROCEEDINGS OF THE 14TH. INTERNATIONAL TELETRAFFIC CONGRESS - ITC 1 JUAN-LES-PINS, JUNE 6 - 10, 1994, vol. 1A, 6 June 1994, LABETOULLE J;ROBERTS J W (EDS ), pages 367-376, XP000593427
- GLITHO R H: "ISOLATING FAULTY ROUTING TABLES IN SS7 NETWORKS: PRESENT AND FUTURE" IEEE COMMUNICATIONS MAGAZINE, vol. 34, no. 5, 1 May 1996, pages 98-104, XP000574146

## Description

### BACKGROUND OF THE INVENTION

The present invention relates to a method of determining accessibility states in a network, the network comprising at least a source node and a destination node, which source node generates messages and transmits the messages to the destination node, the network further comprising a transfer domain, which comprises at least a transfer node, for relaying the messages between the source node and the destination node, wherein the transfer domain can use a plurality of links for routing to the destination node. An example of a network of such nature is a CCITT Common Channel Signalling System No.7 network used, among other purposes, for the transfer of call control information between (international) telephony exchanges. The source node and the destination node are not capable of relaying incoming messages. The transfer node is capable of relaying incoming messages. In CCITT Common Channel Signalling System No. 7 networks the transfer node is designed to generate fault messages, when a link between the transfer node and the destination node goes down. These fault messages typically are transmitted to a so called Network Management Centre, where maintenance people are present. In this way the maintenance people are informed of problems in the network. In prior art methods, the maintenance people are only informed of inaccessible destination nodes and of faults in the individual links from transfer nodes. When a link between the transfer domain and the destination node goes down, the CCITT Common Channel Signalling System No. 7 network is capable of re-routing messages to the destination node by means of another link. Due to this fact, the maintenance people do not give much attention to link faults of individual links between the transfer domain and the destination node, because the unavailability of one of the links does not affect the accessibility of the destination node from the transfer domain, directly. An illustrative example of such a network is described in EP-A-0 376 556. However, if upon the occurrence of one or more additional link faults, further links between the transfer domain and the destination node go down, the destination node may become inaccessible from the transfer domain.

### SUMMARY OF THE INVENTION

It is an object of the present invention to provide a method of determining accessibility states in a network in which the maintenance people are informed in a better way of a critical situation, regarding the accessibility of the destination node from the transfer domain, so that pro-active fault management may be carried out.

To obtain this object, according to the present invention, the method of determining accessibility states is characterised in that, individual availability states of the links between the transfer domain and the destination domain are monitored, in that at least an accessibility state of the destination node, seen from the transfer node is monitored and in that, by correlating the individual availability states of the links and the accessibility state of the destination node seen from the transfer node, based on routing data, the accessibility state of the destination node, seen from the transfer domain, is determined, in which the accessibility is determined to be in a first state, when all the links are available and the destination node is accessible from all transfer nodes connected to these links, in which the accessibility is determined to be in a second state, when all the links are unavailable or the destination node is inaccessible from all transfer nodes connected to these links that can route to that destination node, and in which the accessibility is determined to be in a third state, when it is determined to be neither in the first state nor in the second state. The first accessibility state of the destination node is defined as "accessible". The second accessibility state of the destination node is defined as "inaccessible". The third accessibility state of the destination node is defined as "degraded". As soon as the accessibility state of the destination node becomes "degraded" or "inaccessible", a notifying message is generated for the maintenance people. Upon occurrence of the "degraded" state the maintenance people know, that although the destination node is still accessible from the transfer domain, one or more of the links, that are connected to transfer nodes in the transfer domain and that are used for routing messages from the transfer domain to the destination node are unavailable or the destination node is inaccessible from at least one of the transfer nodes connected to the links that can route to that destination node. This means that the accessibility state of the destination node may become "inaccessible", if one or more additional links go down or if the destination node becomes inaccessible from additional transfer nodes. The maintenance people can avoid this severe situation by repairing the faults in the network, which are the cause of the "degraded" state. So, if the method according to the invention is used, the maintenance people are able to carry out pro-active fault management, thereby minimising the chance that the accessibility state of the destination node, seen from the transfer domain, becomes "inaccessible".

The invention further relates to a device for applying this method.

### REFERENCES

CCITT Common Channel Signalling System No.7 Recommendations
EP-A-0 376 556 (AMERICAN TELEPHONE AND TELEGRAPH COMPANY)

### BRIEF DESCRIPTION OF THE DRAWINGS

Figure 1 shows a network having a simple configuration in which the method according to the present invention can be applied,
Figure 2 shows a functional block diagram of a device for applying the method according to the present invention.

### EXEMPLARY EMBODIMENT

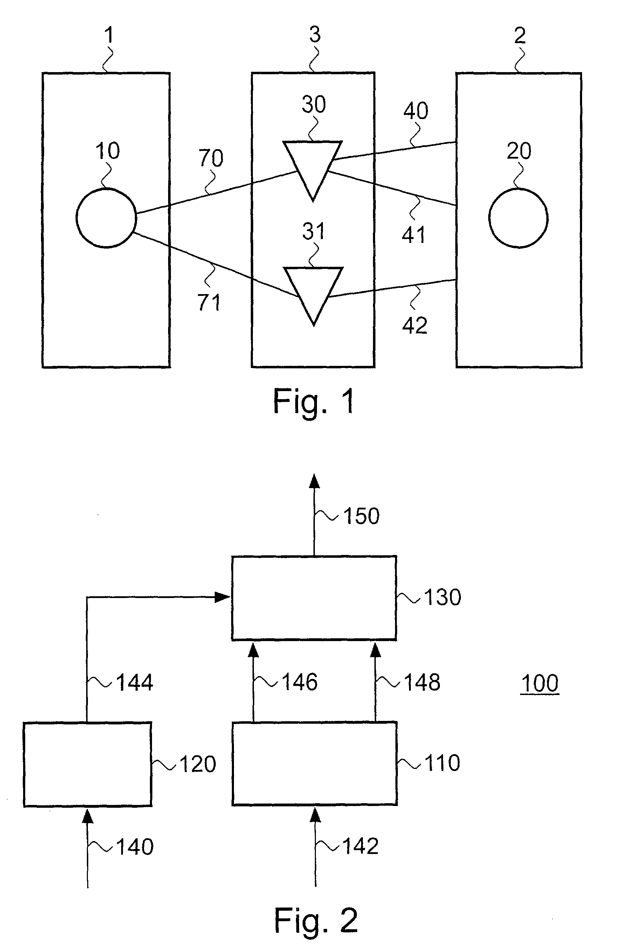

Referring to the drawings, figure 1 shows a network having a simple configuration in which the method according to the present invention can be applied. The network comprises a source domain 1, a destination domain 2 and a transfer domain 3. The source domain 1 comprises a source node 10. The destination domain 2 comprises a destination node 20. The transfer domain 30 comprises a first transfer node 30 and a second transfer node 31. The source node 10 is connected to the first transfer node 30 by means of a link 70. The source node 10 is connected to the second transfer node 31 by means of a link 71. The first transfer node 30 is connected to the destination domain 2 by means of a link 40 and a link 41. The second transfer node 31 is connected to the destination domain 2 by means of a link 42. The source node 10 is designed for generating and transmitting messages to the destination node 20. The transfer nodes 30,31 are designed for relaying the messages, coming from the source node 10, to the destination node 20.

The source node 10 is for example an international exchange, situated in a first country. The destination node 20 is for example an international exchange, situated in a second country. These international exchanges are typically coupled to national signalling networks. The source node and the destination node are signalling end points (SEPs). The transfer nodes 30,31 are typically signalling transfer points (STPs), situated in the first country. The source node 10 and the transfer nodes 30,31 typically are managed by one network operator. The destination nodes 20 typically are managed by another network operator. The destination network may comprise further transfer nodes and destination nodes but these are not shown in the drawing.

The transfer nodes in CCITT Common Channel Signalling System No.7 networks are generally designed to re-route messages, when there are faults in the network. Furthermore, the transfer nodes are designed to transmit information related to the network configuration to a Network Management Centre. Finally, the transfer nodes are designed to generate two types of alarms:
- an alarm of type I, when a link is unavailable from a transfer node.
- an alarm of type II, when a destination node is inaccessible via the transfer node.

These alarms are transmitted to the Network Management Centre. In this Centre a device 100 is present for representing accessibility states of destination nodes in the network. The working of a transfer node is not described in detail in the present application, because it is generally known prior art, described for example in the CCITT Common Channel Signalling System No.7 Recommendation. A functional block diagram of the device 100 is shown in figure 2. The device is designed to generate alarm states. This function is shown in figure 2 by means of function block 110. The generation of alarm states is done on basis of alarms 142 generated by the transfer nodes, which may be of the type I or type II, as described hereinbefore. The possible alarm states are, that a link between a transfer node and a destination node is unavailable, which is indicated by arrow 146 or, that a destination node is inaccessible from a transfer node, which is indicated by arrow 148. The device 100 is furthermore designed for determining the links between a transfer node and a destination node, which may be used for routing. This function is shown in figure 2 by means of function block 120. The determination of the links, which may be used for routing between a transfer node and a destination node is done on basis of information related to the network configuration 140 coming from the transfer nodes. The information generated by function block 120 is indicated by arrow 144. The device 100 furthermore comprises a correlation function, which is indicated by means of function block 130. By means of the correlation function the accessibility state of a destination node as seen from a certain transfer domain, is determined (indicated by arrow 150), using the alarm states, indicated by arrows 146, 148 and the information, indicated by arrow 144. Thereto the following algorithm may be used:

### Definitions:

Transfer nodes is the set of all transfer nodes in the transfer domain, Destinations is the set of all destination nodes in the destination domain, Links is a set of all links that are connected to a transfer node in the transfer domain and that are used for routing messages to a destination node.
∀ T ε Transfer nodes, D ε Destinations, L ε Links:
- AccessibleVia (L,D) => Boolean: Destination node D is accessible via the transfer node connected to link L, i.e., this transfer node has not reported that destination node D is inaccessible
- Available (L) => Boolean: Link L is available from the transfer node to which it is connected, i.e., this transfer node has not reported that link L is unavailable
- Routed (L,D) => Boolean: Link L is connected to a transfer node and is used by this transfer node for routing to destination node D

### Algorithm:

### ∀ D ε Destination nodes

- Accessible (D) => Boolean: ∀ L s links : Routed (L,D) => (Available (L)
∧ AccessibleVia (L,D))

So, a destination node D is given the state "accessible" if all links used to route to destination node D are available and none of the transfer nodes connected to these links have reported incapability of reaching D.
- Inaccessible (D) => Boolean: ∀ L ε links : Routed (L,D) =>
(¬Available (L) ∨ ¬AccessibleVia (L,D))

So, a destination node is given the state "inaccessible" if all links used to route to destination node D are either unavailable or have a transfer node connected thereto that reported incapability of reaching D.
- Degraded (D) => Boolean: ¬Accessible (D) ∧ ¬Inaccessible (D)

In all other situations the destination node is given the state "degraded".
In order to explain the algorithm an example is given with reference to the network shown in figure 1: Suppose that link 40 goes down, while all the other elements of the network are working. As a result, the transfer node 30 sends an alarm message of the type I to the Network Management Centre. Since only one of the links between the transfer domain 3 used for routing to destination node 20 is down and all the other links are working, the accessibility state of destination node 20, as seen from the transfer domain 3, is "degraded".
Suppose now, that also the link 41 goes down. As a result, the transfer node 30 sends alarm messages of both the type I and type II to the Network Management Centre since destination node 20 is inaccessible for transfer node 30. However, there is still a link 42 that can be used to route to destination node 20, so the status of this destination node as seen from the transfer domain 3, is still "degraded".
Finally, transfer node 31 receives a message from destination domain 2 that link 42 cannot be used for routing to destination node 20. As a result, the transfer node 31 sends an alarm message of the type II to the Network Management Centre. Now all links used for routing to destination node 20 are down or have a transfer node connected for which destination node 20 is inaccessible. The algorithm will therefore assign the status "inaccessible" to destination node 20 as seen from transfer domain 3.

The function blocks 110,120,130 of the device 100 are preferably implemented by a computer device loaded with appropriate software for carrying out these functions. The computer device should be connected to a user interface for showing the accessibility state of a destination node as seen from a transfer domain, if this state is "inaccessible" or "degraded". Preferably, also states of individual links (indicated by arrow 146) and the accessibility states of destination nodes as seen from an individual transfer node (indicated by arrow 148) are shown by means of this user interface.

The embodiment of the present invention described herein is intended to be taken in an illustrative and not a limiting sense. For example the described algorithm may be adapted in the case, that no fault messages related to the accessibility state of destination nodes as seen from a transfer node are supported by the network.

Furthermore the method of the present invention also may be used in other networks than the telephony signalling network, such as data networks and also in telephony signalling networks having another configuration than the one shown in Figure 1.

## Claims

1. Method of determining accessibility states in a network, the network comprising at least a source node (10) and a destination node (20), which source node (10) generates messages and transmits the messages to the destination node (20), the network further comprising a transfer domain (3), which comprises at least a transfer node (30-31), for relaying the messages between the source node (10) and the destination node (20), wherein the transfer domain (3) can use a plurality of links (40-42) for routing to the destination node (20), **characterised in that**, individual availability states of the links (40-42) between the transfer domain (3) and the destination domain (2) are monitored, **in that** at least an accessibility state of the destination node (20), seen from the transfer node (30-31) is monitored and **in that**, by correlating the individual availability states of the links (40-42) and the accessibility state of the destination node (20) seen from the transfer node (30-31), based on routing data, the accessibility state of the destination node (20), seen from the transfer domain (3), is determined, in which the accessibility is determined to be in a first state, when all the links (40-42) are available and the destination node is accessible from all transfer nodes (30-31) connected to these links (40-42), in which the accessibility is determined to be in a second state, when all the links (40-42) are unavailable or the destination node is inaccessible from all transfer nodes (30-31) connected to these links (40-42) that can route to that destination node (20), and in which the accessibility is determined to be in a third state, when it is determined to be neither in the first state nor in the second state.

2. Device for applying the method according to claim 1.

## Patentansprüche

1. Verfahren zur Bestimmung der Zugänglichkeitszustände in einem Netzwerk, wobei das Netzwerk mindestens einen Quellenknoten (10) und einen Zielknoten (20) umfasst, wobei der Quellenknoten (10) Nachrichten erzeugt und die Nachrichten an den Zielknoten (20) übermittelt, wobei das Netzwerk weiterhin eine Transferdomäne (3) umfasst, welche mindestens einen Transferknoten (30-31) umfasst, um Nachrichten zwischen dem Quellenknoten (10) und dem Zielknoten (20) weiterzuleiten, wobei die Transferdomäne (3) eine Vielzahl von Verbindungen (40-42) einsetzen kann, um an den Zielknoten (20) weiterzuleiten, **dadurch gekennzeichnet, dass** individuelle Verfügbarkeitszustände der Verbindungen (40-42) zwischen der Transferdomäne (3) und der Zieldomäne (2) überwacht werden, dass mindestens ein Zugänglichkeitszustand des Zielknotens (20), wie er von dem Transferknoten (30-31) gesehen wird, überwacht wird, und das durch Korrelationen der individuellen Verfügbarkeitszustände der Verbindungen (40-42) und dem Zugänglichkeitszustand des Zielknotens (20), wie er von dem Transferknoten (30-31) gesehen wird, basierend auf den Weiterleitungsdaten, der Zugänglichkeitszustand des Zielknotens (20), wie er von der Transferdomäne (3) gesehen wird, bestimmt wird, indem die Zugänglichkeit als in einem ersten Zustand befindlich bestimmt wird, wenn alle Verbindungen (40-42) verfügbar sind und der Zielknoten von allen Transferknoten (30-31) zugänglich ist, die mit diesen Verbindungen (40-42) verbunden sind, in dem die Zugänglichkeit als in einem zweiten Zustand befindlich bestimmt wird, wenn alle Verbindungen (40-42) nicht verfügbar sind oder der Zielknoten von allen Transferknoten (30-31) unzugänglich ist, die mit diesen Verbindungen (40-42) verbunden sind, die an diesen Zielknoten (20) weiterleiten können, und in dem die Zugänglichkeit als in einem dritten Zustand befindlich bestimmt wird, wenn festgestellt wird, dass sie weder im ersten noch im zweiten Zustand ist.

2. Vorrichtung zur Durchführung des Verfahrens nach Anspruch 1.

## Revendications

1. Procédé pour déterminer des états d'accessibilité dans un réseau, le réseau comprenant au moins un noeud d'origine (10) et un noeud de destination (20), lequel noeud d'origine (10) produit des messages et envoie les messages au noeud de destination (20), le réseau comprenant en outre un domaine de transfert (3) qui comprend au moins un noeud de transfert (30-31), pour transmettre les messages entre le noeud d'origine (10) et le noeud de destination (20), dans lequel le domaine de transfert (3) peut utiliser une pluralité de liaisons (40-42) pour réaliser l'acheminement au noeud de destination (20), **caractérisé en ce que** des états individuels de disponibilité des liaisons (40-42) entre le domaine de transfert (3) et le domaine de destination (2) sont contrôlés, **en ce qu'**au moins un état d'accessibilité du noeud de destination (20), vu à partir du noeud de transfert (30-31) est contrôlé et **en ce que**, sous l'effet de la corrélation des états individuels de disponibilité des liaisons (40-42) et des états d'accessibilité du noeud de destination (20) vu à partir du noeud de transfert (30-31), sur la base de données d'acheminement, l'état d'accessibilité du noeud de destination (20), vu à partir du domaine de transfert (3), est déterminé, et dans lequel l'accessibilité est déterminée comme étant située dans un premier état, lorsque toutes les liaisons (40,42) sont disponibles et que le noeud de destination est accessible à partir de tous les noeuds de transfert (30-31) connectés à ces liaisons (40-42), et dans lequel l'accessibilité est déterminée comme étant dans un second état, lorsque toutes les liaisons (40-42) sont indisponibles ou que le noeud de destination est inaccessible à partir de tous les noeuds de transfert (30-31) connectés à ces liaisons (40-42), qui peuvent aboutir à ce noeud de destination (20), et dans lequel l'accessibilité est déterminée comme étant dans un troisième état, lorsqu'il est déterminé comme n'étant ni dans le premier état, ni dans le second état.

2. Dispositif pour la mise en oeuvre du procédé selon la revendication 1.
